# EUROPEAN PATENT APPLICATION

(11) **EP 2 837 842 A2**
(43) Date of publication of application: **18.02.2015**
(21) Application number: 14178510.5
(22) Date of filing: 25.07.2014
(51) Int. Cl.: F16D 3/18, F16D 11/04, F16D 21/04, F16D 11/00

(54) **Dog clutch control unit for automatic transmission**

(30) Priority: 30.07.2013 JP 2013157894
(71) Applicant: AISIN SEIKI KABUSHIKI KAISHA, Kariya-shi, Aichi 448-8650 (JP)
(72) Inventor: Mishima, Keisuke, Kariya-shi, Aichi 448-8650 (JP); Iwasaki, Yasuhisa, Kariya-shi, Aichi 448-8650 (JP); Komura, Masahiko, Kariya-shi, Aichi 448-8650 (JP); Iwata, Takashi, Kariya-shi, Aichi 448-8650 (JP); Mori, Kyosuke, Kariya-shi, Aichi 448-8650 (JP)
(74) Representative: Kramer Barske Schmidtchen Patentanwälte PartG mbB

(57) **Abstract**

A dog clutch control unit for an automatic transmission (13) includes: a dog clutch transmission mechanism including: a rotating shaft; a clutch ring (30, 32, 44, 46); a clutch hub (34); a sleeve (36) fitted to the clutch hub by means of a spline; an axially moving unit (40); a dog clutch portion (30a); and a stroke position sensor (38), the spline having high teeth higher than remaining low teeth, and the dog clutch portion including the same number of clutch front teeth as the high teeth, and the dog clutch portion including clutch rear teeth; and a control unit (10) configured to control an action of the axially moving unit on the basis of a detected position detected by the stroke position sensor.

## Description

### TECHNICAL FIELD

This disclosure relates to a control unit for a dog clutch used in an automatic transmissions for vehicles.

### BACKGROUND DISCUSSION

In the related art, a power train for a vehicle includes a transmission configured to convert a torque or the number of rotations from a drive unit such as an engine or an electric motor used for driving in order to transmit the rotation or the torque to drive wheels according to a traveling condition. There are several types of transmissions. For example, a normally engaged type, in which a plurality of idling gears fitted to a rotating shaft coupled to drive wheels so as to be rotatable relatively to each other and so as to be relatively immovable with each other in a direction of rotary axis and a plurality of gears provided on the periphery of a counter shaft provided in parallel to the rotating shaft are normally engaged is known. The transmission of this type includes a sleeve spline fitted to the rotating shaft in parallel so as to be movable in the direction of rotary axis and is configured to engage engaging teeth (splines) provided on a joining surface of the sleeve with respect to the engaged idling gears with engaged teeth (dog clutch teeth) provided on a joined surface of the idling gears, and integrally rotate the idling gears and the rotating axis. The transmission is also configured to transmit the torque and the number of rotations of the rotating shaft to the counter shaft by an interlocked rotation of the idling gears rotating integrally with the rotating shaft and the gears of the counter shaft engaging the idling gears, and perform a change-gear action by engaging the sleeve with an idling gear to be rotated integrally with the rotating shaft, which is selected from a plurality of the idling gears having different numbers of teeth. There is a case where engagement between the sleeve and the idling gear is not achieved smoothly depending on timing of pushing the sleeve against the idling gear.

In order to achieve a smooth engagement in such a case, JP 11-82710A (Reference 1) discloses a configuration in which when the sleeve cannot be engaged with the idling gear, the torque that presses the sleeve against the idling gear is reduced once, and then the sleeve is pressed against the idling gear at a large torque again.

With this configuration, in a case where engagement between the sleeve and the idling gear is not achieved, only the engaging action is executed again, and hence the both parties can engage without performing the operation of transmission itself again from the beginning.

However, with a transmission control method disclosed in Reference 1, a timer is used for determining the fact that the sleeve cannot be engaged with a dog clutch of the idling gear, so that a re-entry control that engages the sleeve with the idling gear again is performed when a predetermined engagement position is not reached even after a certain period of time has elapsed. Therefore, termination time of entry control before the re-entry, which is to be set with the timer, needs to be set to a value not shorter than a period of time taken to move a predetermined position normally (period of time required for the sleeve to engage without being rejected by the dog clutch). Consequently, at a time point when it is determined that the sleeve cannot engage the dog clutch of the idling gear, the dog clutch is already pressed against the sleeve and the differential number of rotations between the sleeve and the idling gear becomes small. Therefore, it takes a long time to reach a next engageable position, or an associative rotation occurs and it takes long time until next engagement. In this manner, there is a probability that a long period of time is required for transmission.

### SUMMARY

Thus, a need exists for a dog clutch control unit for an automatic transmission configured to achieve a quick transmission action when a sleeve is moved to engage a dog clutch at the time of transmission.

A first aspect of this disclosure is directed to a dog clutch control unit for an automatic transmission including: a dog clutch transmission mechanism including: a rotating shaft rotatably coupled to one of an input shaft and an output shaft of the automatic transmission and supported so as to be rotatable about an axis; a clutch ring supported so as to be rotatable about the rotating shaft and rotatably coupled to the other one of the input shaft and the output shaft; a clutch hub fixed to the rotating shaft adjacently to the clutch ring; a sleeve fitted to the clutch hub by means of a spline so as to be movable in a direction of the axis; an axially moving unit configured to move the sleeve in the direction of the axis; a dog clutch portion formed so as to protrude from the clutch ring toward the sleeve and configured to disengageably engage the spline according to the axial movement of the sleeve; and a stroke position sensor configured to detect the position of movement of the sleeve in the direction of the axis, the spline having a plurality of high teeth higher than remaining low teeth, the dog clutch portion having an outer diameter larger than an inner diameter of the high teeth and smaller than an inner diameter of the low teeth, and the dog clutch portion including the same number of clutch front teeth as the high teeth so as to extend from a front end surface to a rear end position of the dog clutch portion at positions corresponding to the high teeth, and the dog clutch portion including clutch rear teeth engageable with tooth grooves of the spline from a position retracted from the front end surface of the dog clutch portion by a predetermined amount to the rear end position of the dog clutch portion; and a control unit configured to control an action of the axially moving unit on the basis of a detected position detected by the stroke position sensor, wherein the control unit biases and moves the sleeve toward the dog clutch portion with a first thrust load and, when distal end portions of the high teeth of the spline are displaced toward the clutch rear teeth and reach a first stroke position located at distal end portions of the clutch front teeth, changes the thrust load to a second thrust load which allows the distal end portions of the high teeth of the sleeve to be displaced to the distal end portions of the clutch rear teeth and allows to secure a relative rotation between the sleeve and the dog clutch portion against a frictional force generated by abutment between the distal end portions of the high teeth of the sleeve and the distal end portions of the clutch rear teeth of the dog clutch portion and, when the distal end portions of the high teeth of the sleeve reach a second stroke position at the distal end portions of the clutch rear teeth, changes the thrust load to a third thrust load in which a thrust load which allows the distal end portions of the high teeth of the sleeve to be displaced toward teeth grooves defined by the clutch rear teeth of the dog clutch portion against the frictional force generated by abutment between the distal end portions of the high teeth of the sleeve and the distal end portions of the clutch rear teeth of the dog clutch portion and a thrust load which allows to secure the relative rotation between the sleeve and the dog clutch portion against the frictional force generated by abutment between the distal end portions of the high teeth of the sleeve and the distal end portions of the clutch rear teeth of the dog clutch portion are applied alternately, and when the distal end portions of the high teeth of the sleeve reach a third stroke position of the distal end portions of the clutch rear teeth located rearward of the second stroke position, and increases the thrust load to a fourth thrust load larger than the third thrust load.

According to the configuration described above, since the third thrust load that is applied by the distal end portions of the high teeth of the sleeve reaching the second stroke position on the distal end portions of the clutch rear teeth and displacing toward the third stroke position located rearward of the second stroke position by the distal end portions of the clutch rear teeth is increased to be larger than the second thrust load by applying the thrust load which allows the distal end portions of the high teeth of the sleeve to be displaced toward the teeth grooves defined by the clutch rear teeth of the dog clutch portion against the frictional force generated by abutment between the distal end portions of the high teeth of the sleeve and the distal end portions of the clutch rear teeth of the dog clutch portion and the thrust load which allows to secure the relative rotation between the sleeve and the dog clutch portion against the frictional force generated by abutment between the distal end portions of the high teeth of the sleeve and the distal end portions of the clutch rear teeth of the dog clutch portion alternately, whereby the high teeth are allowed to be displaced quickly from the distal end portions of the clutch rear teeth, that is, the second stroke position to the third stroke position, and the spline of the sleeve and the dog clutch portion are engaged. Therefore, when moving the sleeve and engaging the sleeve with the dog clutch portion at the time of a gear change, a quick change-gear action is enabled. In addition, since the second thrust load and the third thrust load have the thrust load which allows to secure the relative rotation between the sleeve and the dog clutch portion against the frictional force generated by abutment between the distal end portions of the high teeth of the sleeve and the distal end portions of the clutch rear teeth of the dog clutch portion, such an event that the differential number of rotations therebetween becomes small due to the abutment of the dog clutch portion with the distal end portions of the clutch rear teeth, and hence it takes a long time to reach a next engageable position, or an associative rotation occurs and it takes a long time until next engagement may be resolved, so that a quick change-gear action is enabled.

A second aspect of this disclosure is directed to the dog clutch control unit for an automatic transmission according to the first aspect, wherein the control unit sets a work-in set time which corresponds to a period of time required for the distal end portions of the high teeth of the sleeve to reach the third stroke position from a predetermined position on the basis of a relative differential rotation between the sleeve and the clutch ring and, if the fact that the distal end portions of the high teeth of the sleeve do not reach from the predetermined position to the third stroke position within the work-in set time is detected, changes the thrust load to a fifth thrust load in which a thrust load which is smaller than the thrust load which allows the distal end portions of the high teeth of the sleeve to be displaced toward the teeth grooves defined by the clutch rear teeth of the dog clutch portion against the frictional force generated by abutment between the distal end portions of the high teeth of the sleeve and the distal end portions of the clutch rear teeth of the dog clutch portion in the third thrust load and a thrust load which is smaller than the thrust load and allows to secure the relative rotation between the sleeve and the dog clutch portion against the frictional force generated by abutment between the distal end portions of the high teeth of the sleeve and the distal end portions of the clutch rear teeth of the dog clutch portion are applied alternately.

In this configuration, the load that biases and moves the sleeve toward the dog clutch portion changes from the third thrust load to the fifth load in which the thrust load which is reduced from the third thrust load and allows the distal end portions of the high teeth of the sleeve to be displaced toward the tooth grooves defined by the clutch rear teeth of the dog clutch portion against the frictional force generated by abutment between the distal end portions of the high teeth of the sleeve and the distal end portions of the clutch rear teeth of the dog clutch portion of the third thrust load and the thrust load which allows to secure the relative rotation between the sleeve and the dog clutch portion against the frictional force generated by abutment between the distal end portions of the high teeth of the sleeve and the distal end portions of the clutch rear teeth of the dog clutch portion are applied alternately. Therefore, even when one of the sleeve and the distal end portions of the clutch rear teeth is deteriorated to have a rough surface and is caught and is rotated associatively, the caught state may be released by weakening of the thrust load and, in addition, the relative rotation between the sleeve and the dog clutch portion are secured. Consequently, the sleeve is allowed to engage the tooth grooves defined by the next clutch rear teeth quickly, so that a quick change-gear action is achieved.

A third aspect of this disclosure is directed to the dog clutch control unit for an automatic transmission according to the first aspect, wherein the distal end portions of the clutch front teeth each include a front end surface and inclined first chamfered surfaces on both sides thereof, and the first stroke position corresponds to boundary sides between the first chamfered surfaces and side surfaces of the clutch front teeth.

In this configuration, since the first stroke position is set to the boundary sides between the first chamfered surfaces and the side surfaces of the clutch front teeth, the fact that the high teeth reach the first stroke position can be detected easily by the stroke position sensor.

A fourth aspect of this disclosure is directed to the dog clutch control unit for an automatic transmission according to the first aspect, wherein the distal end portions of the clutch rear teeth each include a front end surface, and the second stroke position corresponds to the front end surfaces.

In this configuration, since the second stroke position is set to the front end surfaces of the distal end portions of the clutch rear teeth, the fact that the high teeth reach the second stroke position can be detected easily by the stroke position sensor.

A fifth aspect of this disclosure is directed to the dog clutch control unit for an automatic transmission according to the fourth aspect, wherein the distal end portions of the clutch rear teeth each include the front end surface and inclined second chamfered surfaces on both sides thereof, and the third stroke position corresponds to boundary sides between the second chamfered surfaces and side surfaces of the clutch rear teeth.

In this configuration, the third stroke position is set to the boundary sides between the second chamfered surfaces and the side surfaces of the clutch rear teeth, the fact that the high teeth reach the third stroke position can be detected easily by the stroke position sensor.

A sixth aspect of this disclosure is directed to the dog clutch control unit for an automatic transmission according to the fifth aspect, wherein the third thrust load includes a thrust load which may overcome a frictional resistance of the second chamfered surfaces.

In this configuration, since the distal end portions of the high teeth of the sleeve can be displaced quickly through the second chamfered surfaces toward the teeth grooves defined by the clutch rear teeth of the dog clutch portion by an action of the thrust load which may overcome the frictional resistance of the second chamfered surfaces included in the third thrust load, a quick change-gear action is enabled when moving the sleeve and engaging the sleeve with the dog clutch portion at the time of a gear change.

A seventh aspect of this disclosure is directed to the dog clutch control unit for an automatic transmission according to the fifth aspect, wherein the fifth thrust load includes a thrust load which cannot overcome the frictional resistance on the second chamfered surfaces.

In this configuration, even when one of the sleeve and the distal end portions of the clutch rear teeth is deteriorated to have a rough surface and is caught and is rotated associatively by an action of the thrust load which cannot overcome the frictional resistance of the second chamfered surfaces included in the fifth thrust load, the caught state may be released by weakening of the thrust load and, in addition, the relative rotation between the sleeve and the dog clutch portion are secured. Consequently, the sleeve is allowed to engage the tooth grooves defined by the next clutch rear teeth quickly, so that a quick change-gear action is achieved.

An eighth aspect of this disclosure is directed to the dog clutch control unit for an automatic transmission according to the first aspect, wherein the third thrust load shifts the stroke of the sleeve in micromotion.

In this configuration, since a state in which the distal end portions of the high teeth are located between the clutch front teeth may be maintained, an event that the sleeve and the dog clutch portion are completely disengaged is prevented, that is, occurrence of necessity of repeated operation such as re-entry of the high teeth of the sleeve to a range of alignment of rotation may be prevented. Accordingly, quick engagement between the sleeve and the dog clutch portion is achieved.

A ninth aspect of this disclosure is directed to the dog clutch control unit for an automatic transmission according to the second aspect, wherein the fifth thrust load shifts the stroke of the sleeve in micromotion.

In this configuration, since a state in which the distal end portions of the high teeth are located between the clutch front teeth may be maintained, an event that the sleeve and the dog clutch portion are completely disengaged is prevented, that is, the high teeth of the sleeve may prevent occurrence of necessity of repeated operation such as re-entry of the high teeth of the sleeve to a range of alignment of rotation. Accordingly, quick engagement between the sleeve and the dog clutch portion is achieved.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic drawing of a vehicle provided with an automatic transmission having a dog clutch of an embodiment disclosed here;
Fig. 2 is a schematic drawing of the automatic transmission having the dog clutch of the embodiment disclosed here;
Fig. 3 is a block diagram of a control unit;
Fig. 4 is an exploded perspective view of a dog clutch transmission mechanism;
Fig. 5 is a front view of a clutch ring;
Fig. 6 is a front view of a clutch hub;
Fig. 7 is a front view of a sleeve;
Fig. 8 is a flowchart illustrating thrust load control of an axially moving unit;
Fig. 9A is a drawing illustrating an example of a relationship of a sleeve position and a thrust load with respect to a dog clutch portion with an elapsed time for gear change;
Fig. 9B is a drawing illustrating another example of the relationship of the sleeve position and the thrust load with respect to the dog clutch portion with an elapsed time for gear change;
Fig. 10A is a cross-sectional view illustrating the dog clutch in which the sleeve is at a neutral position;
Fig. 10B is a cross-sectional view illustrating the dog clutch in which the sleeve is at an S1 position;
Fig. 10C is a cross-sectional view illustrating the dog clutch in which the sleeve is between the S1 position and an S4 position;
Fig. 10D is a cross-sectional view illustrating the dog clutch in which the sleeve is at an S2 position;
Fig. 10E is a cross-sectional view illustrating the dog clutch in which the sleeve is at an S3 position;
Fig. 11A is a drawing illustrating an action of the dog clutch when viewed from the outside in a radial direction;
Fig. 11B is a drawing illustrating an action of the dog clutch in which the sleeve is at the S1 position when viewed from the outside in the radial direction;
Fig. 11C is a drawing illustrating an action of the dog clutch in which the sleeve is between the S1 position and the S4 position when viewed from the outside in the radial direction; and
Fig. 11D is a drawing illustrating an action of the dog clutch in which the sleeve is at the S3 position when viewed from the outside in a radial direction.

### DETAILED DESCRIPTION

### Examples

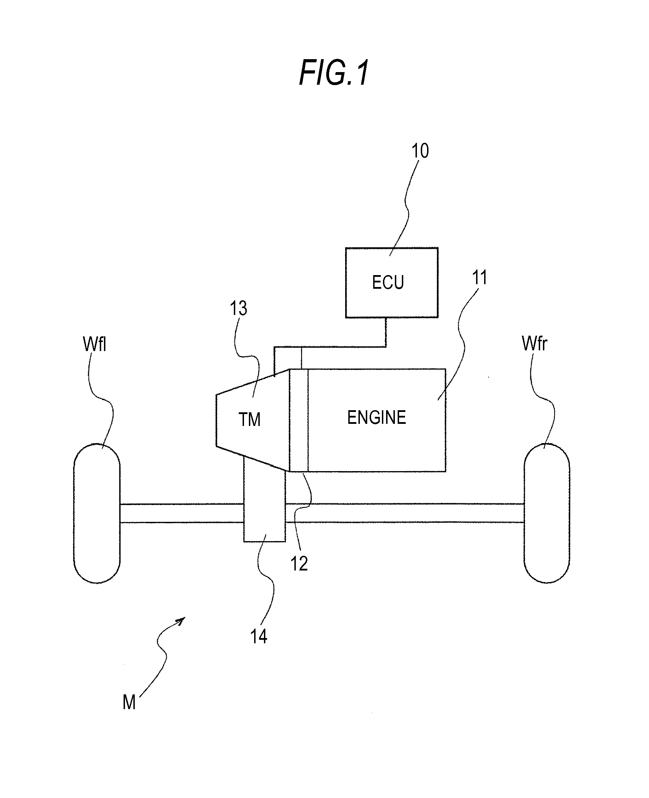

Embodiments in which an automatic transmission (an automated transmission) provided with a dog clutch control unit for an automatic transmission of this disclosure is applied to a vehicle will be described with reference to the drawings. Fig. 1 is a schematic drawing illustrating a configuration of the vehicle. A vehicle M includes an engine 11, a clutch 12, an automatic transmission (an automated transmission)13, a differential unit 14, and drive wheels (left and right front wheels) Wfl and Wfr as illustrated in Fig. 1. The engine 11 is configured to generate a drive force by burning fuel. The drive force of the engine 11 is configured to be transmitted to the drive wheels Wfl and Wfr via the clutch 12, the automatic transmission 13, and the differential unit 14 (so-called an FF vehicle).

The clutch 12 is configured to be connected and disconnected automatically according to a command from a control unit (ECU) 10. The automatic transmission 13 includes a dog clutch transmission mechanism integrated therein and is configured to select, for example, one of six gears for a forward movement and one gear for a reverse movement automatically. The differential unit 14 includes both a final gear and a differential gear, and is formed integrally with the automatic transmission 13.

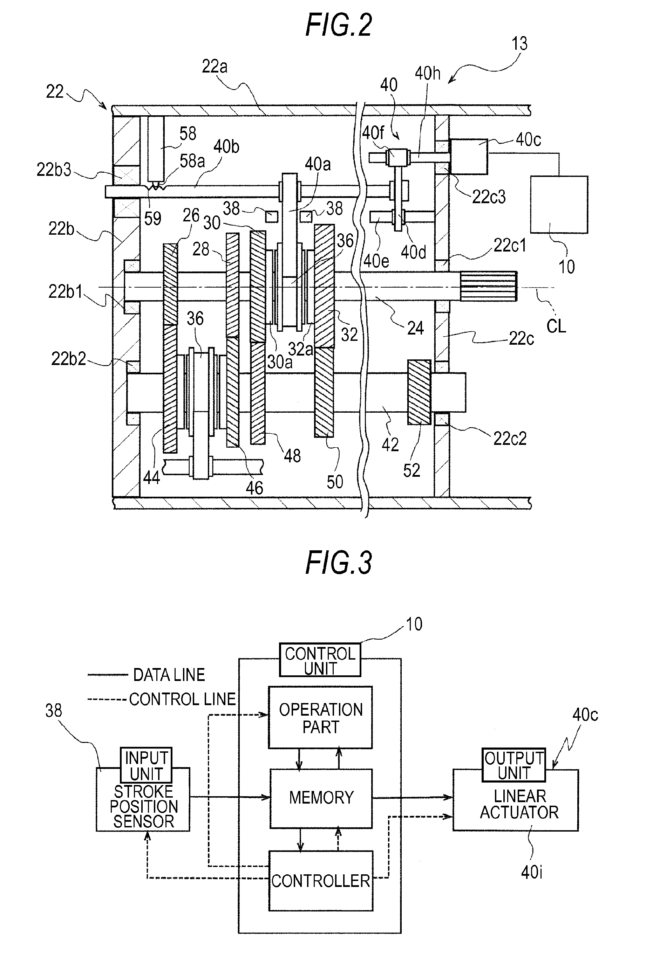

The automatic transmission 13 includes a casing 22, an input shaft (rotating shaft) 24, a first input gear 26, a second input gear 28, a third clutch ring (third input gear) 30, a fourth clutch ring (fourth input gear) 32, a clutch hub (not illustrated in Fig. 2) 34, a sleeve 36, a stroke position sensor 38, an axially moving unit 40, an output shaft 42, a first clutch ring (first output gear) 44, a second clutch ring (second output gear) 46, a third output gear 48, and a fourth output gear 50 as illustrated in Fig. 2. The first clutch ring (first output gear) 44, the second clutch ring (second output gear) 46, the clutch hub 34, the sleeve 36, and the axially moving unit 40 constitute part of a first dog clutch transmission mechanism, and the third clutch ring (third input gear) 30, the fourth clutch ring (fourth input gear) 32, the clutch hub 34, the sleeve 36, the stroke position sensor 38, and the axially moving unit 40 constitute part of a second dog clutch transmission mechanism. The above-described first and second dog clutch transmission mechanisms and the control unit 10 constitute part of the dog clutch control unit for an automatic transmission.

The casing 22 includes a substantially bottomed cylindrical-shaped body 22a, a first wall 22b as a bottom wall of the body 22a, and a second wall 22c which partitions the interior of the body 22a in the lateral direction.

The input shaft 24 is rotatably supported by the casing 22. In other words, one end (left end) of the input shaft 24 is axially supported by the first wall 22b via a bearing 22b1, and the other end (right end) side of the input shaft 24 is axially supported by the second wall 22c via a bearing 22c1. The other end of the input shaft 24 is rotatably coupled to an output shaft of the engine 11 via the clutch 12. Therefore, an output from the engine 11 is input to the input shaft 24 when the clutch 12 is connected. The input shaft 24 is a rotating shaft of the embodiment disclosed here. The input shaft (rotating shaft) 24 of the embodiment disclosed here is rotatably coupled directed to an input shaft of the automatic transmission 13, and is axially supported so as to be rotatable about a rotary axis (axis) CL.

The input shaft 24 is provided with the first input gear 26, the second input gear 28, the third clutch ring (third input gear) 30, and the fourth clutch ring (fourth input gear) 32. The first and second input gears 26 and 28 are fixed to the input shaft via spline fitting or the like so as not to be rotatable relatively with respect to the input shaft 24. The third input gear is formed on an outer periphery of the third clutch ring 30 which is supported so as to be rotatable with respect to the input shaft 24. The fourth input gear is formed on an outer periphery of the fourth clutch ring 32 which is supported so as to be rotatable with respect to the input shaft 24. The clutch hub 34 is fixed on the input shaft 24 between the third clutch ring 30 and the fourth clutch ring 32 adjacently thereto so as not to be rotatable with each other via spline fitting or the like. The third input gear (third clutch ring) 30 engages the third output gear described later, and the fourth input gear (fourth clutch ring) 32 engages the fourth output gear described later.

The casing 22 is provided with the output shaft 42 in parallel to the input shaft 24. The output shaft 42 is rotatably supported by the casing 22. In other words, one end (left end) of the output shaft 42 is axially supported by the first wall 22b via a bearing 22b2, and the other end (right end) of the output shaft 42 is axially supported by the second wall 22c via a bearing 22c2.

The output shaft 42 is provided with the first clutch ring (first output gear) 44, the second clutch ring (second output gear) 46, the third output gear 48, the fourth output gear 50, and a fifth output gear 52. The first clutch ring (first output gear) 44 is configured to engage the first input gear 26, and is provided with a helical gear configured to engage the first input gear 26 formed on an outer peripheral surface. The second clutch ring (second output gear) 46 is configured to engage the second input gear 28, and is provided with a helical gear configured to engage the second input gear 28 formed on an outer peripheral surface. The third output gear 48 is configured to engage the third clutch ring (third input gear) 30, and is provided with a helical gear configured to engage the third clutch ring (third input gear) 30 formed on an outer peripheral surface. The fourth output gear 50 is configured to engage the fourth clutch ring (fourth input gear) 32, and is provided with a helical gear configured to engage the fourth clutch ring (fourth input gear) 32 formed on an outer peripheral surface. The fifth output gear 52 is configured to engage an input gear (not illustrated) of the differential unit 14, and is provided with a helical gear configured to engage the input gear formed on an outer peripheral surface.

The clutch hub 34 is fixed to the output shaft 42 between the first clutch ring 44 and the second clutch ring 46 adjacently thereto via spline fitting or the like. Configurations of the first clutch ring 44, the second clutch ring 46, and the clutch hub 34 are the same as those of the third clutch ring 30, the fourth clutch ring 32, and the clutch hub 34 on the input shaft 24, so that the description will be omitted. The third output gear 48, the fourth output gear 50, and the fifth output gear 52 are fixed to the output shaft 42 via spline fitting or the like. A drive force of the engine 11 inputs from the input shaft 24, is transmitted to the output shaft 42, and is finally output to the differential unit 14 via the fifth output gear 52.

The second dog clutch transmission mechanism of the input shaft 24 and the first dog clutch transmission mechanism of the output shaft 42 have the same configuration, and hence the second dog clutch transmission mechanism of the input shaft 24 will be described as a representative.

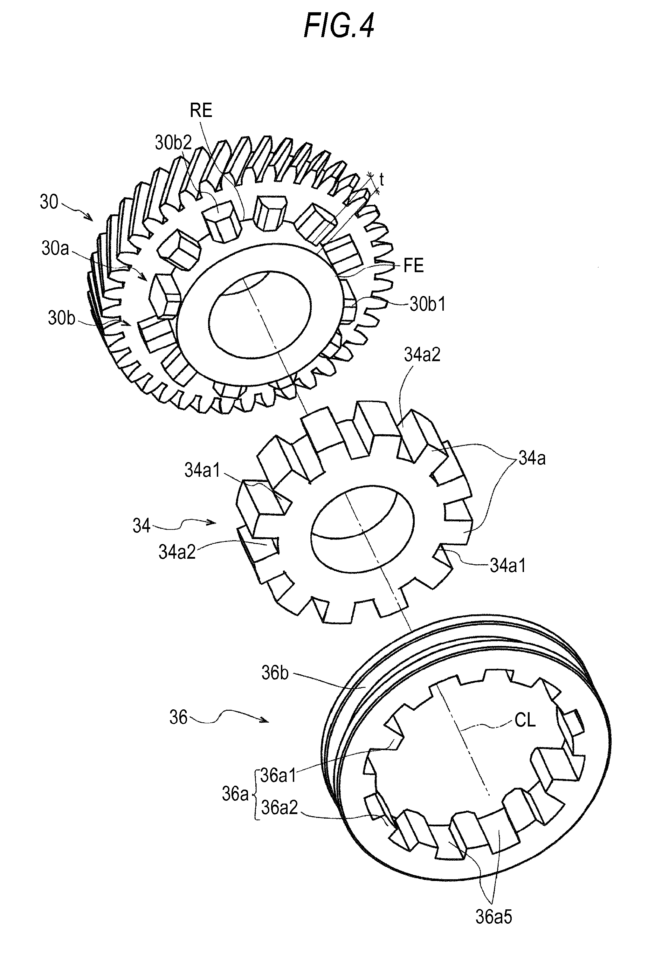

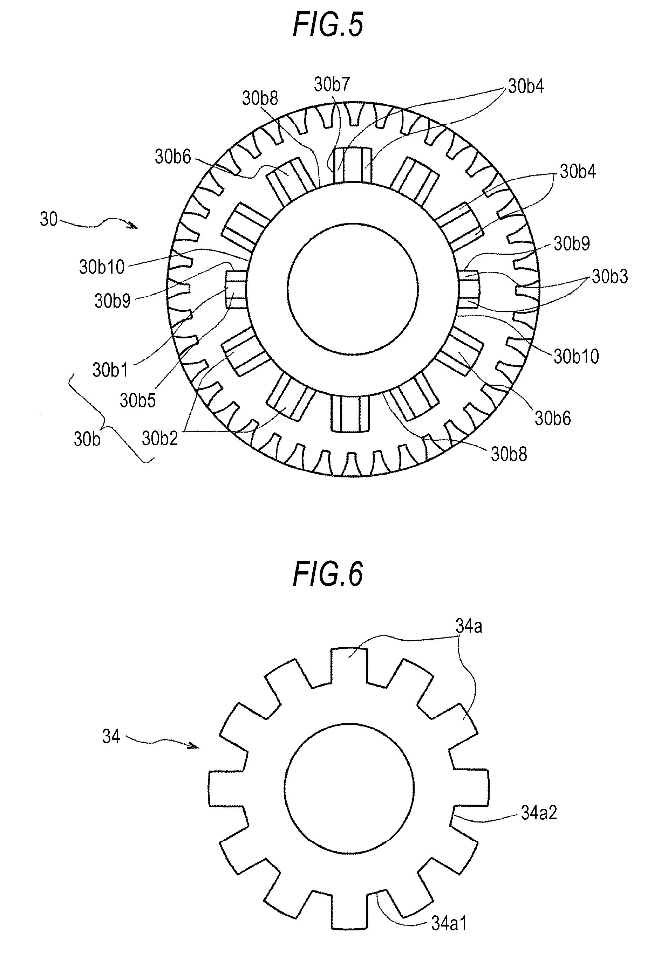

The clutch hub 34 supported so as to be integrally rotatable via spline fitting (not illustrated) with respect to the input shaft 24 is formed into a flat column shape as illustrated in Fig. 4 and Fig. 6, and spline teeth 34a are formed on an outer peripheral surface of the clutch hub 34. Twelve spline teeth 34a are formed at the same pitch in a circumferential direction, and the respective spline teeth 34a are formed to have the same addendum diameter. The diameter of a dedendum of the spline teeth 34a is formed so as to correspond to engaging grooves 34a1 and 34a2 having a depth that allows engagement of high teeth 36a1 and low teeth 36a2 of the sleeve 36. Inner teeth (spline) 36a of the sleeve 36 slidably engage the spline teeth 34a of the clutch hub 34.

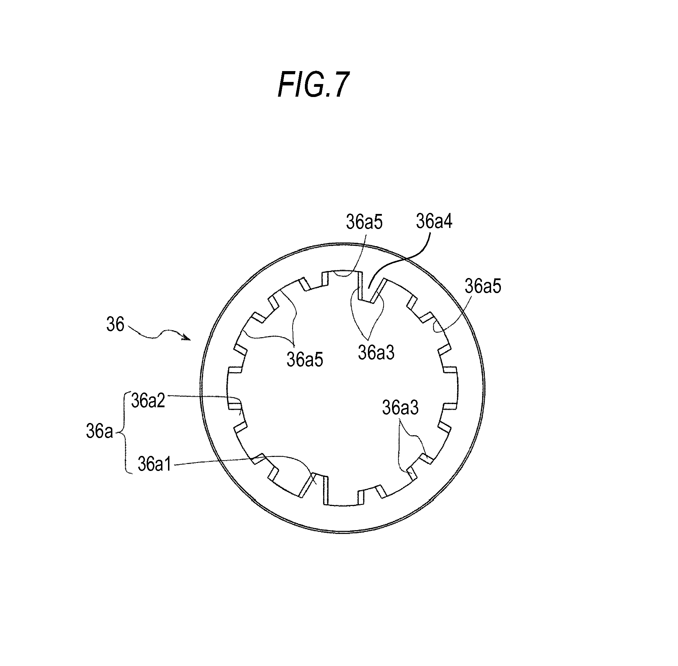

The sleeve 36 is formed to have a substantially ring shape, and is provided on an outer periphery of the sleeve 36 with an outer peripheral groove 36b with which a fork 40a (see Fig. 2) of the axially moving unit 40 engages slidably formed in a circumferential direction. Twelve inner teeth 36a in total are formed on an inner periphery of the sleeve 36 at the same pitch in the circumferential direction so as to have the same dedendum diameter as illustrated in Fig. 4 and Fig. 7.

The inner teeth 36a include the high teeth 36a1 and the low teeth 36a2 having different heights, and a pair of the high teeth 36a1 having a higher height are formed on the circumference so as to oppose each other at an angle of 180 degrees. The remaining ten low teeth 36a2 have the same height and lower than the high teeth 36a1.

An end surface (front end surfaces 36a4) of the sleeve 36 opposing the third and the fourth clutch rings 30 and 32, which corresponds to surfaces of the high teeth 36a1 and the low teeth 36a2 extending at a right angle with the rotary axis CL, is formed with chamfered surfaces 36a3 at 45 degrees with respect to the direction of rotation at front and rear corners in the direction of rotation (see Fig. 7). Accordingly, corners are prevented from being chipped due to an impact with respect to dog clutch teeth described later of the third and fourth clutch rings 30 and 32. Distal end portions of the high teeth 36a1 of the sleeve 36 each include the front end surface 36a4 and the chamfered surfaces 36a3.

Tooth grooves 36a5 are formed between the adjacent high tooth 36a1 and the low tooth 36a2, and between the adjacent low teeth 36a2. Clutch front teeth 30b1 and clutch rear teeth 30b2 of the third clutch ring 30 described later engage these tooth grooves 36a5. The high teeth 36a1 and the low teeth 36a2 of the sleeve 36 engage the engaging grooves 34a1 and 34a2 of the clutch hub 34.

The input shaft 24 is provided with the third clutch ring 30 and the fourth clutch ring 32 on both sides adjacent to the clutch hub 34. Since the third clutch ring 30 and the fourth clutch ring 32 have a substantially symmetrical structure about the clutch hub 34, the third clutch ring 30 will be described as a representative.

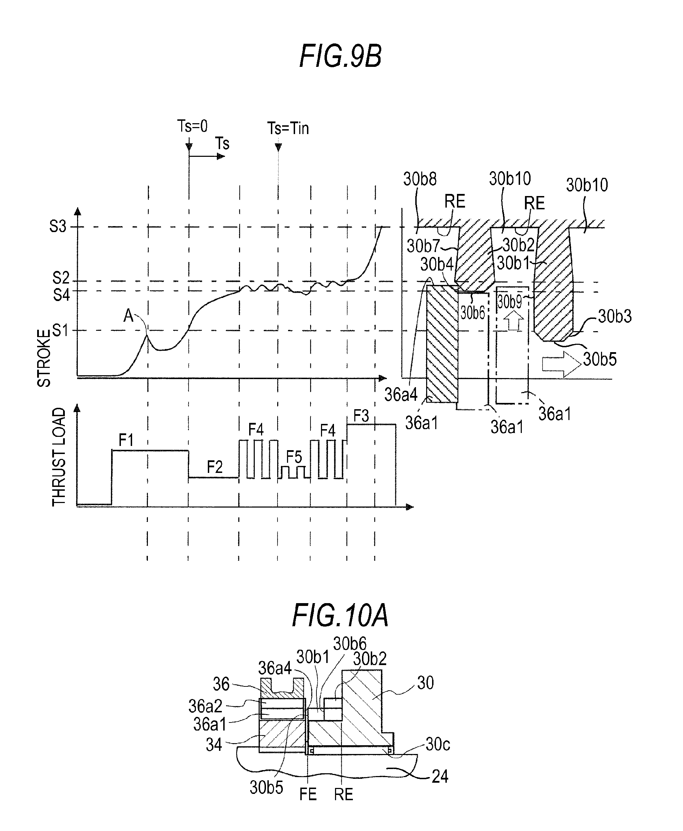

The third clutch ring 30 is provided on the input shaft 24 via a bearing 30c so as to be rotatable relatively to each other and so as to be relatively immovable with each other in the direction of the rotary axis CL (see Fig. 10A). The third input gear formed on an outer peripheral surface of the third clutch ring 30 constitutes an idling gear configured to be rotatable relatively with respect to the input shaft 24. The third clutch ring 30 is provided with a ring-shaped third dog clutch portion 30a formed on a surface (engaging portion) opposing the clutch hub 34. A plurality of dog clutch teeth 30b configured to engage the inner teeth 36a of the sleeve 36 are formed on an outer periphery of the third dog clutch portion 30a. The dog clutch teeth 30b are provided with two types of the clutch front teeth 30b1 and the clutch rear teeth 30b2 having different heights. The dog clutch teeth 30b are formed to have the same dedendum diameter at the same pitch in the circumferential direction.

A pair (two) of the clutch front teeth 30b1 are provided at opposed position in rotation symmetry at an angle of 180 degrees in the circumferential direction. The diameter of the addendum of the clutch front teeth 30b1 is larger than the diameter of the addendum of the high teeth 36a1 of the sleeve, and smaller than the diameter of the addendum of the low teeth 36a2. The clutch front teeth 30b1 are formed so as to extend from a front end surface FE of the third dog clutch portion 30a which constitutes part of an engaging portion to a rear end position RE of the third dog clutch portion 30a in the direction of the rotary axis CL. First chamfered portions 30b3 which are inclined by 45 degrees from the direction of rotation are formed between front end surfaces 30b5 of the clutch front teeth 30b1 and both side surfaces 30b9 of the clutch front teeth 30b1 on the sleeve 36 side. When the sleeve 36 approaches the third clutch ring 30 while rotating relatively with each other, the clutch front teeth 30b1 engage the high teeth 36a1 of the sleeve 36 and do not engage the low teeth 36a2. The front end surface 30b5 of the clutch front teeth 30b1 on the sleeve 36 side and the first chamfered portions 30b3 constitute distal end portions of the clutch front teeth 30b1.

Ten in total and five each of the clutch rear teeth 30b2 are disposed between the two clutch front teeth 30b1 at phase positions, and an addendum diameter is formed to be larger than an addendum diameter of the low teeth 36a2 of the sleeve 36 as illustrated in Fig. 4 and Fig. 5. The clutch rear teeth 30b2 are formed so as to extend from a position retracted from the front end surface FE of the third dog clutch portion 30a constituting an engagement portion on the sleeve 36 side by a predetermined amount t to the rear end position RE of the third dog clutch portion 30a in the direction of the rotary axis CL.

A second chamfered portions 30b4 inclined by 45 degrees in the direction of rotation is provided between a front end surfaces 30b6 of the clutch rear teeth 30b2 and both side surfaces 30b7 on the sleeve 36 side. When the sleeve 36 approaches the third clutch ring 30 while rotating relatively with each other, if the high teeth 36a1 and the low teeth 36a2 enter the third clutch ring 30 to a position retracted by the predetermined amount t, the clutch rear teeth 30b2 start engagement between the high teeth 36a1 and the low teeth 36a2 of the sleeve. By the engagement of the clutch rear teeth 30b2 with the high teeth 36a1 and the low teeth 36a2 of the sleeve, a large rotational torque is transmitted safely and reliably. The front end surface 30b6 of the clutch rear teeth 30b2 on the sleeve 36 side and the second chamfered portions 30b4 constitute distal end portions of the clutch rear teeth 30b2.

Various positional sensors such as an optical positional sensor or a linear encoder may be used as the stroke position sensor 38 configured to detect the positions of the distal end portions (the front end surfaces 36a4 of the high teeth 36a1) of the sleeve 36.

The control unit 10 includes a memory, an operation part, and a controller as illustrated in Fig. 3, and controls a thrust load value of a linear actuator 40i that drives the axially moving unit 40, and the position of movement of the front end surfaces 36a4 of the high teeth 36a1 on the basis of the position of the distal end portion of the sleeve 36 (the front end surfaces 36a4 of the high teeth 36a1) with respect to the distal end portions of the clutch front teeth 30b1 of the third dog clutch portion 30a, and relative position signals with respect to the distal end portion of the clutch rear teeth 30b2 and the rear end position RE of the dog clutch portion 30a detected by the stroke position sensor 38.

The axially moving unit 40 is configured to reciprocate the sleeve 36 along the axial direction and, if a reaction force is applied from the third clutch ring 30 or the fourth clutch ring 32 in a case where the sleeve 36 is pressed against the third clutch ring 30 or the fourth clutch ring 32, allow the sleeve 36 to move by the reaction force.

The axially moving unit 40 includes the fork 40a, a fork shaft 40b, and a drive unit 40c. A distal end portion of the fork 40a is formed so as to match the shape of an outer periphery of the outer peripheral groove 36b of the sleeve 36. A proximal end portion of the fork 40a is fixed to the fork shaft 40b. The fork shaft 40b is supported by the casing 22 so as to be slidable along the direction of the axis. In other words, one end (left end) of the fork shaft 40b is rotatably supported by the first wall 22b via a bearing 22b3, and the other end (right end) side of the fork shaft 40b is fixed to a bracket 40d. The bracket 40d is slidable by a guide member (baffle) 40e protruding in the direction of the axis from the second wall 22c and is fixed to a nut member 40f so as not to be rotatable relatively with each other. The nut member 40f is screwed on a drive shaft 40h provided with the drive unit 40c so as to be movable forward and backward. The drive shaft 40h is rotatably supported by the second wall 22c via a bearing 22c3.

The drive unit 40c is a linear drive unit having the linear actuator 40i as a drive source, and for example, there is a ball screw type linear actuator as the linear actuator 40i. The drive unit 40c includes, for example, a casing formed into a cylindrical shape and having a plurality of coils disposed in an inner peripheral direction as a stator (not illustrated), a rotor (not illustrated) provided so as to be rotatable with respect to the stator and including a plurality of N-pole magnets and S-pole magnets facing the stator with a magnetic gap provided therebetween and disposed alternately on the outer periphery, the drive shaft 40h (ball screw shaft) rotating together with the rotor about the rotary axis of the stator, and the nut member 40f including a ball nut to be screwed onto the drive shaft 40h. The drive shaft 40h is screwed in the nut member 40f via a plurality of balls (not illustrated) so as to be capable of rotating relatively with each other.

By controlling energization of respective coils of the stator, the drive shaft 40h rotates arbitrarily in both normal and reverse directions to reciprocate the nut member 40f and the fork shaft 40b, and fixedly position the nut member 40f and the fork shaft 40b at arbitrary positions. The drive unit 40 is configured to allow the sleeve 36 to move by a reaction force when the reaction force is applied from the third clutch ring 30 or the fourth clutch ring 32 by forming a lead of the ball screw shaft to be long.

A detent mechanism 58 is provided in the vicinity of the first wall 22b of the fork shaft 40b. The detent mechanism 58 includes a stopper 58a biased in a direction at a right angle with respect to an axis of the fork shaft 40b by a spring, not illustrated, and is configured to be capable of positioning the sliding movement of the fork shaft 40b in the axial direction at arbitrary positions by the stopper 58a being fitted to one of a plurality of triangular grooves 59 provided on the fork shaft 40b along the axis with a spring force.

In the embodiment disclosed here, a ball crew type linear actuator is employed as the drive unit. However, other types of drive unit such as a solenoid type drive unit or a hydraulic type drive unit may be used as long as the drive unit is configured to allow the sleeve 36 to be moved by a reaction force when the reaction force is applied from the third clutch ring 30 or the fourth clutch ring 32 when the sleeve 36 is pressed against the third clutch ring 30 and the fourth clutch ring 32.

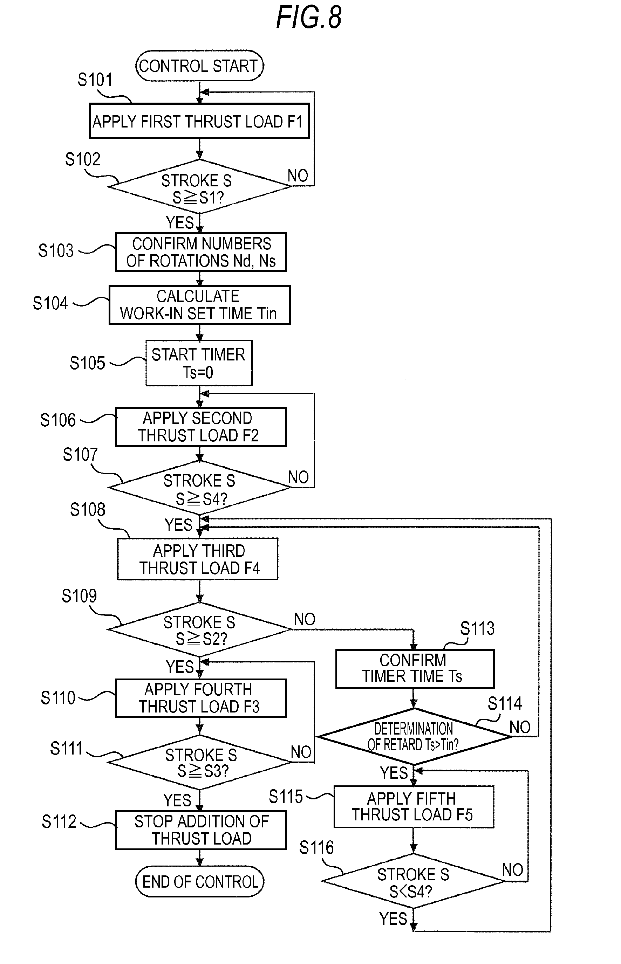

An operation of the dog clutch unit for an automatic transmission described above will be described with reference to Fig. 8 to Fig. 11. Here, in the case of shifting the gear up, if the sleeve 36 rotates at a high speed and a small inertia moment, and the third clutch ring 30 (third input gear) rotates at a low speed and a large inertia moment, the sleeve 36 is decelerated. In contrast, in the case of shifting the gear down, if the sleeve 36 rotates at a low speed and a small inertia moment, and the third clutch ring 30 (third input gear) rotates at a high speed and a large inertia moment, the sleeve 36 is accelerated. In the following operation, a decelerating action of the sleeve 36 when gear is shifted up will be described.

First of all, the sleeve 36 is located between the third clutch ring 30 and the fourth clutch ring 32, and a spline (inner teeth) 36a of the sleeve 36 are positioned at a neutral position at which the the spline 36a does not engage any of the dog clutch teeth 30b or the like of the third clutch ring 30 and the fourth clutch ring 32 (see Fig 10A).

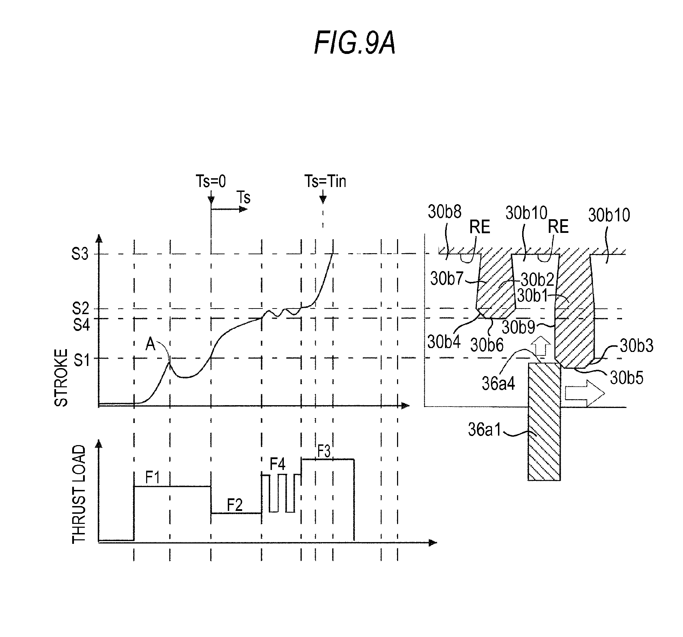

As illustrated in Figs. 9A and 9B, boundary sides between the first chamfered portions 30b3 and the side surfaces 30b9 of the clutch front teeth 30b1 of the third clutch ring 30 are defined as a first stroke position S1. The front end surfaces 30b6 of the clutch rear teeth 30b2 of the third clutch ring 30 is defined as a second stroke position S4. Boundary sides between the second chamfered portions 30b4 and the side surfaces 30b7 of the clutch rear teeth 30b2 of the third clutch ring 30 are defined as a third stroke position S2. The third stroke position S2 is a position corresponding to inlet ports of tooth grooves 30b8 and 30b10 defined by the clutch rear teeth 30b2. A rear end surface (the rear end position RE of the third dog clutch portion 30a) of the clutch rear teeth 30b2 is defined as a fourth stroke position S3.

A range of movement of the end surfaces (the front end surfaces 36a4) on the third clutch ring 30 side which constitute the distal end portions of the high teeth 36a1 of the sleeve 36 is divided into four ranges of movement, namely, a range from the neutral position to the first stroke position S1, a range from the first stroke position S1 to the second stroke position S4, a range from the second stroke position S4 to the third stroke position S2, and a range from the third stroke position S2 to the fourth stroke position S3, and the thrust load to be applied by the axially moving unit 40 controls in four stages from F1 to F4 or five stages from F1 to F5 according to the conditions (see Figs. 9A and 9B).

The control unit 10 applies a control current to which a predetermined thrust load is applied to the linear actuator 40i of the axially moving unit 40 upon reception of a signal indicating the start of gear change. By expanding the drive shaft 40h by the linear actuator 40i, the fork shaft 40b is moved and the sleeve 36 is slid toward the third clutch ring 30 by the fork 40a. The sleeve 36 approaches toward the third clutch ring 30 while rotating relatively by an amount of difference in rotation. At this time, the control unit 10 applies a constant first thrust load F1 (Step S101 in Fig. 8, hereinafter, referred to as "S101").

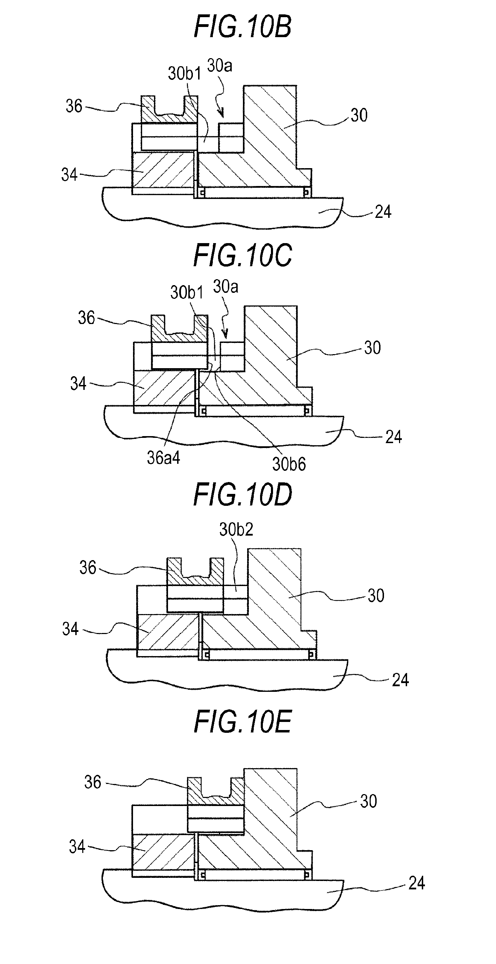

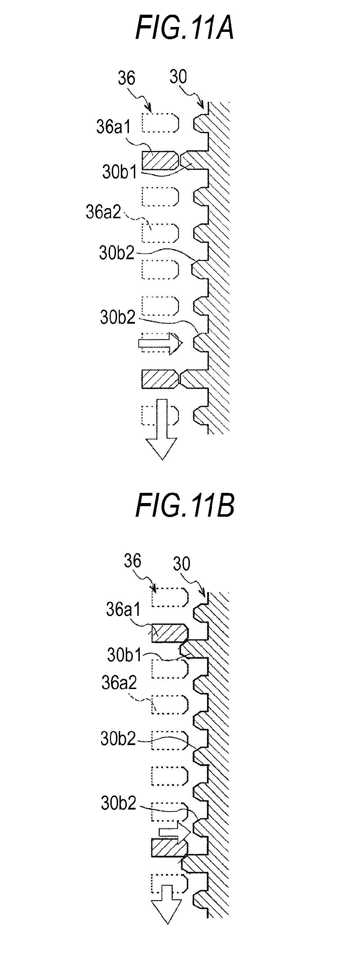

As illustrated in Fig. 10B and Fig. 11A, the high teeth 36a1 of the sleeve 36 come into contact with the front end surfaces 30b5 or the first chamfered portion 30b3 of the clutch front teeth 30b1 of the third clutch ring 30. With this contact, the difference in rotation between the sleeve 36 and the third clutch ring 30 is reduced by a small amount. At this time, the low teeth 36a2 of the sleeve 36 do not come into contact with anything.

When the front end surfaces 36a4 of the high teeth 36a1 come into contact with the front end surfaces 30b5 or the first chamfered portions 30b3 of the clutch front teeth 30b1, but do not reach the first stroke position S1 (the range of alignment of rotation), and are rejected (point A in Figs. 9A and 9B), the sleeve 36 is brought closer to the third clutch ring 30 again by the first thrust load F1. The first thrust load F1 is a thrust load which generates a speed which enables entry to the range of alignment of rotation after the high teeth 36a1 go beyond the predetermined clutch front teeth 30b1 of the third dog clutch portion 30a without engaging therewith during the relative rotation between the sleeve 36 and the third clutch ring 30 during a period in which the third dog clutch portion 30a and the sleeve 36 further rotate relatively with each other and reach the next clutch front teeth 30b1. Specifically, control is performed on the basis of calculation performed as needed depending on outer diameters of the sleeve 36 and the third dog clutch portion 30a, the pitch of the respective teeth to be engaged, and the speed of relative rotation between the sleeve 36 and the third dog clutch portion 30a.

As illustrated in Figs. 10B and 10C, and Fig. 11B, when the fact that the front end surfaces 36a4 of the high teeth 36a1 reach the first stroke position S1 is detected by the stroke position sensor 38 by bringing the sleeve 36 closer to the third clutch ring 30, the control unit 10 determines that the front end surface 36a4 of the high teeth 36a1 is in the range of alignment of rotation (S102), and confirms a number of rotation Ns of the sleeve 36 and a number of rotations Nd of the third clutch ring 30, that is, the third dog clutch portion 30a by a rotation sensor (not illustrated) which is generally known (S103). On the basis of the relative differential rotation between the sleeve 36 and the clutch ring 30 (Ns - Nd), a work-in set time Tin which corresponds to the time required for the front end surfaces 36a4 of the distal end portions of the high teeth 36a1 of the spline 36a to reach the third stroke position S2 of the clutch rear teeth 30b2 is calculated (S104), and counting of a timer count Ts of a timer configured to count the elapse of the work-in set time Tin is started (S105), and the thrust load applied by the axially moving unit 40 is changed from the first thrust load F1 to a second thrust load F2 (S106). The work-in set time Tin corresponds to a time period required for the front end surface 36a4 of the distal end portions of the high teeth 36a1 of the spline 36a to reach from a predetermined position thereof to the third stroke position S2 of the dog clutch rear teeth 30b2. Therefore, when the predetermined position is set to the first stroke position S1, the work-in set time Tin may be set to a time period corresponding to a time period from when the high teeth 36a1 of the spline 36a passes by the side surfaces 30b9 of the clutch front teeth 30b1 until the side surfaces 30b9 of the next clutch front teeth 30b1 approach and come into contact therewith on the basis of the relative differential rotation between the sleeve 36 and the clutch ring 30 (Ns - Nd), for example, .

The second thrust load F2 is a thrust load at which the front end surfaces 36a4 of the distal end portions of the high teeth 36a1 of the sleeve 36 can be displaceable to the front end surfaces 30b6 of the distal end portions of the clutch rear teeth 30b2, and the relative rotation between the sleeve 36 and the dog clutch portion 30a can be secured against a frictional force generated by abutment between the front end surfaces 36a4 of the high teeth 36a1 of the sleeve 36 and the front end surfaces 30b6 of the clutch rear teeth 32b2 of the dog clutch portion 30a can be secured. In this manner, the control unit 10 controls the axially moving unit 40 so that a thrust load which is capable of securing the relative rotation between the sleeve 36 and the third dog clutch portion 30a against a frictional force generated between the front end surfaces 36a4 of the abutted high teeth 36a1 and the front end surfaces 30b6 of the clutch rear teeth 30b2 is applied as the second thrust load F2 to be applied in the range of alignment of rotation. Accordingly, movement at a relative speed which corresponds to the small difference in rotation (or associative rotation in a state in which the high teeth 36a1 is in abutment with the clutch rear teeth 30b2) is prevented so that a quick change-gear action can be realized.

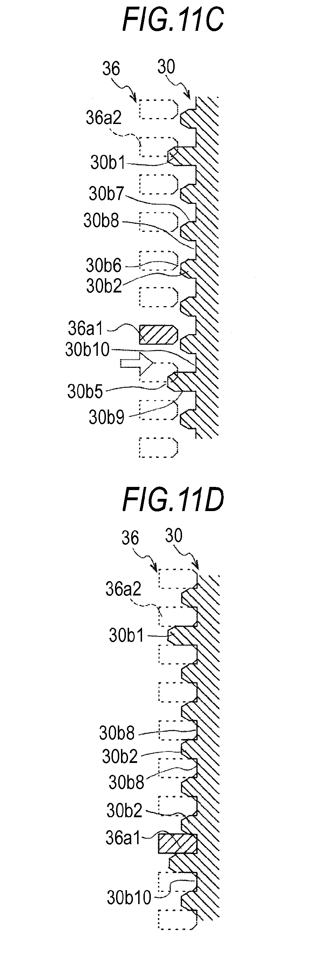

As illustrated in Fig. 10C and Fig. 11C, in a case where the sleeve 36 is moved toward the third clutch ring 30, if the fact that the front end surfaces 36a4 of the high teeth 36a1 of the sleeve 36 reach the second stroke position S4 is detected by the stroke position sensor 38 (S107), the control unit 10 changes the thrust load applied by the axially moving unit 40 from the second thrust load F2 to the third thrust load F4 (S108), and the front end surfaces 36a4 of the high teeth 36a1 of the sleeve 36 are moved toward the teeth groove 30b8 or 30b10 of the dog clutch portion 30a. The teeth groove 30b8 is defined by the clutch rear teeth 30b2, and the teeth groove 30b10 is defined by the clutch rear teeth 30b2 and the clutch front teeth 30b1. The both tooth grooves 30b8 and 30b10 are defined by at least the clutch rear teeth 30b2.

The third thrust load F4 is a thrust load in which a thrust load capable of displacing the sleeve 36 toward the tooth grooves 30b8 and 30b10 defined by the clutch rear teeth 30b2 of the dog clutch portion 30a against a frictional force generated by abutment between the distal end portions 36a4 of the high teeth 36a1 of the sleeve 36 and the second chamfered surfaces 30b4 on the distal end portions of the clutch rear teeth 30b2 of the dog clutch portion 30a, and a thrust force in which the relative rotation between the sleeve 36 and the dog clutch portion 30a can be secured against a frictional force generated by abutment between the front end surfaces 36a4 of the high teeth 36a1 of the sleeve 36 and the second chamfered surfaces 30b4 of the distal end portions of the clutch rear teeth 32b2 of the dog clutch portion 30a can be secured are applied alternately (see Figs. 9A and 9B).

The front end surfaces 36a4 of the high teeth 36a1 of the sleeve 36 approach the third clutch ring 30 at a speed higher than that in the case of the second thrust load F2 while shifting in micromotion without increasing the distance from the second chamfered surfaces 30b4 on the clutch rear teeth 30b2 more than the predetermined value by an action of the third thrust load F4 including a thrust load larger than the second thrust load F2 and applying different thrust loads alternately as illustrated in Fig. 9A. In a case where the fact that the front end surfaces 36a4 of the high teeth 36a1 reach the third stroke position S2 as illustrated in Fig. 10D is detected by the stroke position sensor 38, the control unit 10 determines that the high teeth 36a1 and the low teeth 36a2 have started engagement with the clutch rear teeth 30b2 (S109), and increase the thrust load to be applied by the axially moving unit 40 to the fourth thrust load F3 (S110). The fourth thrust load F3 applied at this time is a thrust load capable of moving the sleeve 36 against a frictional force generated between the high teeth 36a1 and the low teeth 36a2, and the clutch front teeth 30b1 and the clutch rear teeth 30b2 when sliding the sleeve 36 to the third clutch ring 30.

Furthermore, as illustrated in Fig. 10E and Fig. 11D, in a case where the fact that the front end surfaces 36a4 of the high teeth 36a1 reach the fourth stroke position S3 is detected by the stroke position sensor 38 by bringing the sleeve 36 closer to the third clutch ring 30, the control unit 10 determines that the sleeve 36 and the third clutch ring 30 are completely engaged (S111), and addition of the thrust load by the axially moving unit 40 is stopped (S112), energization of a control current that causes a predetermined thrust load to be applied to the linear actuator 40i of the axially moving unit 40 is stopped.

If the fact that the front end surfaces 36a4 of the high teeth 36a1 reach the third stroke position S2 is not detected in S109, and if it is determined that the work-in set time Tin is not elapsed by checking the timer count Ts (S113) (S114), the procedure goes back to S108. If it is determined that the work-in set time Tin has elapsed according to the timer count Ts (S114) in S114, the thrust load to be applied by the axially moving unit 40 is changed from the third thrust load F4 to the fifth thrust load F5 (S115).

The fifth thrust load F5 is a thrust load in which a thrust load smaller than the thrust load capable of displacing toward the tooth grooves 30b8 and 30b10 defined by the clutch rear teeth 30b2 of the dog clutch portion 30a against a frictional force generated by abutment between the distal end portions 36a4 of the high teeth 36a1 of the sleeve 36 and the second chamfered surfaces 30b4 on the distal end portions of the clutch rear teeth 30b2 of the dog clutch portion 30a in the third thrust load F4, and a thrust load, which is a smaller thrust load capable of securing a relative rotation between the sleeve 36 and the dog clutch portion 30a against a frictional force generated by abutment between the front end surfaces 36a4, which are the distal end portions of the high teeth 36a1 of the sleeve 36, and the second chamfered surfaces 30b4, which are the distal end portions of the clutch rear teeth 30b2 of the dog clutch portion 30a are applied alternately.

Even when one of the sleeve 36 and the second chamfered surfaces 30b4 on the distal end portions of the clutch rear teeth 30b2, is deteriorated to have a rough surface and is caught and is rotated associatively, since the caught state may be released by weakening of the thrust load toward the fifth thrust load F5 and, in addition, a relative rotation is secured between the sleeve 36 and the dog clutch portion 30a as illustrated in Fig. 9B, the sleeve 36 is allowed to engage the tooth grooves 30b8 and 30b10 defined by the next clutch rear teeth 30b2 quickly, so that a quick engagement is achieved. As illustrated in Fig. 9B, the sleeve 36 weakened in thrust force toward the fifth thrust load F5 and released from the caught state with the second chamfered surfaces 30b4 of the clutch rear teeth 30b2 passes by the clutch rear teeth 30b2 in the caught state while shifting in micromotion without increasing the distance between the second chamfered surfaces 30b4 and the front end surfaces 30b6 of the clutch rear teeth 30b2 not more than the predetermined value by an action of the fifth thrust load F5 in which different thrust loads are applied alternately.

As illustrated in Fig. 9B, if the sleeve 36 is displaced toward the stroke position S1 with the front end surfaces 36a4 of the distal end portions straddling the second stroke position S4, and then the sleeve 36 is brought closer to the third clutch ring 30, and hence the fact that the front end surfaces 36a4 of the high teeth 36a1 reach from the first stroke S1 side to the second stroke position S4 is detected by the stroke position sensor 38 (S116), the procedure goes back to S108, and the thrust load is changed to the third thrust load F4. If the fact that the front end surfaces 36a4 of the high teeth 36a1 reach the second stroke position S4 is not detected in S116, the procedure goes back to S115.

When the sleeve 36 is moved toward the third clutch ring 30, the high teeth 36a1 may be fitted to either the tooth grooves 30b8 or 30b10 of the dog clutch teeth 30b without using the side surfaces 30b9 of the clutch front teeth 30b1 as a guide. However, if the high teeth 36a1 (and the low teeth 36a2) make an attempt to fit into the tooth groove 30b8 between the clutch rear teeth 30b2, since the distance between teeth of the adjacent clutch rear teeth 30b2 is short, it seems to be rejected by the clutch rear teeth 30b2 in many cases as illustrated in Fig. 10D. Therefore, in order to cause the high teeth 36a1 to engage the dog clutch teeth 30b quickly, it seems to be effective to guide the high teeth 36a1 by the side surfaces 30b9 of the clutch front teeth 30b1 and fit the high teeth 36a1 into the teeth groove 30b10 adjacent to the clutch front teeth 30b1.

However, if the high teeth 36a1 do not enter the tooth groove 30b10 adjacent to the clutch front teeth 30b1 and are rejected in a state in which the difference in rotation between the sleeve 36 and the third clutch ring 30 is reduced, the high teeth 36a1 move at a relative speed corresponding to a little difference in rotation (or the high teeth 36a1 are moved associatively in a state in which the high teeth 36a1 are in abutment with the clutch rear teeth 30b2) until the high teeth 36a1 reach the next clutch front teeth 30b1, it takes time and realization of a quick change-gear action may be impaired.

In this embodiment, the control unit 10 controls the axially moving unit 40 so that a thrust load which is capable of securing the relative rotation between the sleeve 36 and the third dog clutch portion 30a is applied against a frictional force generated between the distal end portions (front end surfaces 36a4) of the abutted high teeth 36a1 and the distal end portions (front end surfaces 30b6) of the clutch rear teeth 30b2 as the second thrust load F2 to be applied to the sleeve 36. Accordingly, movement at a relative speed which corresponds to the small difference in rotation (or associative rotation in a state in which the high teeth 36a1 are in abutment with the front end surfaces 36a4 of the clutch rear teeth 30b2) is prevented so that the high teeth 36a1 can be guided by the side surfaces 30b9 of the clutch front teeth 30b1 quickly and a quick change-gear action can be realized.

In the same manner, in this embodiment, the control unit 10 includes a thrust load which is capable of securing the relative rotation between the sleeve 36 and the third dog clutch portion 30a against a frictional force generated between the distal end portions (front end surfaces 36a4) of the abutted high teeth 36a1 and the distal end portions (second chamfered surfaces 30b4) of the clutch rear teeth 30b2 as the third thrust load F4 to be applied to the sleeve 36, and controls the axially moving unit 40. Accordingly, movement at a relative speed which corresponds to the small difference in rotation (or associative rotation in a state in which the high teeth 36a1 are in abutment with the second chamfered surfaces 30b4 on the clutch rear teeth 30b2) is prevented so that the high teeth 36a1 can be guided by the side surfaces 30b9 of the clutch front teeth 30b1 quickly and a quick change-gear action can be realized.

In the same manner, in this embodiment, the control unit 10 includes a thrust load which is capable of securing the relative rotation between the sleeve 36 and the third dog clutch portion 30a against a frictional force generated between the distal end portions (front end surfaces 36a4) of the abutted high teeth 36a1 and the distal end portions (second chamfered surfaces 30b4) of the clutch rear teeth 30b2 as the fifth thrust load F5 to be applied to the sleeve 36, and controls the axially moving unit 40. Even though one of the sleeve 36 and the distal end portions (second chamfered surfaces 30b4) of the clutch rear teeth 30b2 is deteriorated to have a rough surface and is caught and is rotated associatively, the fifth thrust load F5 is weakened to a level weaker than the third thrust load F4 to be released from the caught state and, in addition, the relative rotation between the sleeve 36 and the dog clutch portion 30a is secured. Accordingly, movement at a relative speed which corresponds to the small difference in rotation (or associative rotation in a state in which the high teeth 36a1 are in abutment with the second chamfered surfaces 30b4 on the clutch rear teeth 30b2) is prevented so that the high teeth 36a1 can be guided by the side surfaces 30b9 of the clutch front teeth 30b1 quickly and a quick change-gear action can be realized.

In this embodiment, the work-in set time Tin has been described as a period of time corresponding to a period of time required for the front end surfaces 36a4 of the distal end portions of the high teeth 36a1 of the sleeve 36 for reaching the third stroke position S2 of the clutch rear teeth 30b2 on the basis of the relative differential rotation between the sleeve 36 and the clutch ring 30 (Ns - Nd) assuming that a predetermined position where the front end surfaces 36a4 of the distal end portions of the high teeth 36a1 of the sleeve 36 used for setting the work-in set time Tin and starting time counting of the elapsed time as the first stroke position S1. Instead, however, the predetermined position where the front end surfaces 36a4 of the distal end portions of the high teeth 36a1 of the sleeve 36 are located may be changed, for example, so as to determine whether the front end surfaces 36a4 of the distal end portions of the high teeth 36a1 of the sleeve 36 can reach from the second stroke position S4 to the third stroke position S2 within the work-in set time Tin, where a time length corresponding to the time length required for the front end surfaces 36a4 of the distal end portions of the high teeth 36a1 of the sleeve 36 to reach the third stroke position S2 on the clutch rear teeth 30b2 on the basis of the relative differential rotation between the sleeve 36 and the clutch ring 30 (Ns - Nd).

As in a case where the gear is shifted downward, if the sleeve 36 rotates at a low speed and a small inertia moment, and the third clutch ring 30 rotates at a high speed and a large inertia moment, the sleeve 36 is accelerated, and the relative rotation between the sleeve 36 and the third clutch ring 30 is reversed from that described above. Therefore, the tooth groove 30b10 of the clutch front teeth 30b1 where the high teeth 36a1 are fitted corresponds to the tooth groove at a position opposite to the clutch front teeth 30b1 (the tooth groove 30b10 on the lower side adjacent to the clutch front teeth 30b1 in Fig. 11 D). Other actions are the same as in the case where the sleeve 36 is decelerated.

The clutch front teeth of this embodiment has been described to be provided at two opposed positions on the circumference of the clutch ring. However, the embodiment disclosed here is not limited thereto. For example, three or more of the clutch front teeth may be arranged on the circumference of the clutch ring equidistantly. The dog clutch transmission mechanism has been described to include the sleeve, the third clutch ring, and the fourth clutch ring. However, the embodiment disclosed here is not limited thereto and, for example, the dog clutch transmission mechanism may include the sleeve, the first clutch ring (first output gear) and the second clutch ring (second output gear).

The rotating shaft has been described to be an input shaft 24 of the automatic transmission to be rotationally coupled to the output shaft of the engine 11 via the clutch 12. However, the embodiment disclosed here is not limited thereto and, for example, a rotating shaft may be an output shaft configured to transmit the rotational torque to the drive wheel side with respect to the automatic transmission. Specifically, in the structure of the automatic transmission having the input shaft of the automatic transmission to be coupled to the output shaft of the engine via the clutch, the counter shaft to be provided in parallel to the input shaft and rotationally coupled thereto via the transmission gear, and the output shaft having a rotary axis parallel to the counter shaft and provided with a plurality of idle gears configured to engage a plurality of the transmission gears provided on the counter shaft, the output shaft may be used as the rotating shaft. In this case, the sleeve side has a large inertia moment, and the clutch ring side has a small inertia moment (free state).

The rotating shaft to be rotationally coupled to the input shaft of the automatic transmission includes a case where the rotating shaft is coupled directly to the input shaft as in this embodiment, and the rotating shaft rotationally coupled to the output shaft of the automatic transmission includes a case where the rotating shaft is directly coupled to the output shaft.

As described above, the dog clutch control unit for an automatic transmission of the embodiment disclosed here includes, a dog clutch transmission mechanism including: a rotating shaft rotatably coupled to one of an input shaft 24 and an output shaft 42 of the automatic transmission 13 and supported so as to be rotatable about an axis; a clutch ring 30 supported so as to be rotatable about the rotating shaft and rotatably coupled to the other one of the input shaft 24 and the output shaft 42; a clutch hub 34 fixed to the rotating shaft adjacently to the clutch ring 30; a sleeve 36 fitted to the clutch hub 34 by means of a spline 36a so as to be movable in the direction of the axis; an axially moving unit 40 configured to move the sleeve 36 in the direction of the axis; a dog clutch portion 30a formed so as to protrude from the clutch ring 30 toward the sleeve 36 and configured to disengageably engage the spline 36a according to the axial movement of the sleeve 36; and a stroke position sensor 38 configured to detect the position of movement of the sleeve 36 in the direction of the axis, the spline 36a having a plurality of high teeth 36a1 higher than remaining low teeth 36a2, the dog clutch portion 30a having an outer diameter larger than an inner diameter of the high teeth 36a1 and smaller than an inner diameter of the low teeth 36a2, the dog clutch portion 30a including the same number of clutch front teeth 30b1 as the high teeth 36a1 so as to extend from a front end surface FE to a rear end position RE of the dog clutch portion 30a at positions corresponding to the high teeth 36a, and the dog clutch portion 30a including clutch rear teeth 30b2 engageable with tooth grooves 36a5 of the spline 36a so as to extend from a position retracted from the front end surface FE of the dog clutch portion 30a by a predetermined amount t to the rear end position RE of the dog clutch portion 30a; and the control unit 10 configured to control an action of the axially moving unit 40 on the basis of a detected position detected by the stroke position sensor 38, the control unit 10 biases and moves the sleeve 36 toward the dog clutch portion 30a with a first thrust load F1 and, when distal end portions 36a4 of the high teeth 36a1 of the spline 36a are displaced toward the clutch rear teeth 30b2 and reach a first stroke position located at distal end portions 30b3 of the clutch front teeth 30b1, changes the thrust load to the second thrust load F2 which allows the distal end portions 36a4 of the high teeth 36a1 of the sleeve 36 to be displaced to the distal end portions 30b6 of the clutch rear teeth 30b2 and allows to secure a relative rotation between the sleeve 36 and the dog clutch portion 30a against a frictional force generated by abutment between the distal end portions 36a4 of the high teeth 36a1 of the sleeve 36 and the distal end portions 30b6 of the clutch rear teeth 30b2 of the dog clutch portion 30a and, when the distal end portions 36a4 of the high teeth 36a1 of the sleeve 36 reach the second stroke position S4 at the distal end portions 30b6 of the clutch rear teeth 30b2, changes the thrust load to a third thrust load F4 in which a thrust load which allows the distal end portions 36a4 of the high teeth 36a1 of the sleeve 36 to be displaced toward tooth grooves 30b8 and 30b10 defined by the clutch rear teeth 30b2 of the dog clutch portion 30a against the frictional force generated by abutment between the distal end portions 36a4 of the high teeth 36a1 of the sleeve 36 and the distal end portions 30b4 of the clutch rear teeth 30b2 of the dog clutch portion 30a and a thrust load which allows to secure the relative rotation between the sleeve 36 and the dog clutch portion 30a against the frictional force generated by abutment between the distal end portions 36a4 of the high teeth 36a1 of the sleeve 36 and the distal end portions 30b4 of the clutch rear teeth 30b2 of the dog clutch portion 30a are applied alternately, and when the distal end portions 36a4 of the high teeth 36a1 of the sleeve 36 reach the third stroke position S2 of the distal end portions of the clutch rear teeth 30b2 located rearward of the second stroke position S4, increases the thrust force to a fourth thrust force F3 larger than the third thrust force F4. Therefore, the control unit 10 increases the third thrust load F4 that is applied by the distal end portions 36a4 of the high teeth 36a1 of the sleeve 36 reaching the second stroke position S4 on the distal end portions of the clutch rear teeth 30b2 and displacing toward the third stroke position S2 located rearward of the second stroke position S4 by the distal end portions of the clutch rear teeth 30b2 is increased to be larger than the second thrust load F2 by applying the thrust load which allows to secure the relative rotation between the sleeve 36 and the dog clutch portion 30a against the frictional force generated by abutment between the distal end portions of the high teeth 36a1 of the sleeve 36 and the distal end portions 30b4 of the clutch rear teeth 30b2 of the dog clutch portion 30a alternately, whereby the high teeth 36a1 are allowed to be displaced quickly from the distal end portions of the clutch rear teeth 30b2, that is, the second stroke position S4 to the third stroke position S2, and the spline 36a of the sleeve 36 and the dog clutch portion 30a are engaged. Therefore, when moving the sleeve 36 and engaging the sleeve 36 with the dog clutch portion 30a at the time of a gear change, a quick change-gear action is enabled. In addition, since the second thrust load F2 and the third thrust load F4 have the thrust load which allows to secure the relative rotation between the sleeve 36 and the dog clutch portion 30a against the frictional force generated by abutment between the distal end portions 36a4 of the high teeth 36a1 of the sleeve 36 and the distal end portions 30b6 and 30b4 of the clutch rear teeth 30b2 of the dog clutch portion 30a, such an event that the differential number of rotations therebetween becomes small due to the abutment of the dog clutch portion 30a with the distal end portions 30b6 and 30b4 of the clutch rear teeth 30b2, and hence it takes a long time to reach a next engageable position, or an associative rotation occurs and it takes a long time until next engagement may be resolved, so that a quick change-gear action is enabled.

As described above, according to the dog clutch control unit for an automatic transmission of the embodiment disclosed here, the control unit 10 sets a work-in set time Tin which corresponds to a period of time required for the distal end portions 36a4 of the high teeth 36a1 of the sleeve 36 to reach the third stroke position S2 from a predetermined position on the basis of a relative differential rotation between the sleeve 36 and the clutch ring 30 and, if the fact that the distal end portions 36a4 of the high teeth 36a1 of the sleeve 36 do not reach from the predetermined position to the third stroke position S2 with in the work-in set time Tin is detected, changes the thrust load to the fifth thrust load F5 in which a thrust load which is smaller than the thrust load which allows the distal end portions 36a4 of the high teeth 36a1 of the sleeve 36 to be displaced toward the tooth grooves 30b8 and 30b10 defined by the clutch rear teeth 30b2 of the dog clutch portion 30a against the frictional force generated by abutment between the distal end portions 36a4 of the high teeth 36a1 of the sleeve 36 and the distal end portions 30b4 of the clutch rear teeth 30b2 of the dog clutch portion 30a of the third thrust load F4 and a thrust load which is smaller than the thrust load and allows to secure the relative rotation between the sleeve 36 and the dog clutch portion 30a against the frictional force generated by abutment between the distal end portions 36a4 of the high teeth 36a1 of the sleeve 36 and the distal end portions 30b4 of the clutch rear teeth 30b2 of the dog clutch portion 30a are applied alternately, the load that biases and moves the sleeve 36 toward the dog clutch portion 30a changes from the third thrust load F4 to the fifth load F5 in which the thrust load which is reduced from the third thrust load F4 and allows the distal end portions 36a4 of the high teeth 36a1 of the sleeve 36 to be displaced toward the tooth grooves 30b8 and 30b10 defined by the clutch rear teeth 30b2 of the dog clutch portion 30a against the frictional force generated by abutment between the distal end portions 36a4 of the high teeth 36a1 of the sleeve 36 and the distal end portions 30b4 of the clutch rear teeth 30b2 of the dog clutch portion 30a of the third thrust load F4 and the thrust load which allows to secure the relative rotation between the sleeve 36 and the dog clutch portion 30a against the frictional force generated by abutment between the distal end portions 36a4 of the high teeth 36a1 of the sleeve 36 and the distal end portions 30b4 of the clutch rear teeth 30b2 of the dog clutch portion 30a are applied alternately. Therefore, even when one of the sleeve 36 and the distal end portions 30b4 of the clutch rear teeth 30b2 is deteriorated to have a rough surface and is caught and is rotated associatively, the caught state may be released by weakening of the thrust load and, in addition, the relative rotation between the sleeve 36 and the dog clutch portion 30a are secured. Consequently, the sleeve 36 is allowed to engage the tooth grooves 30b8 and 30b10 defined by the next clutch rear teeth 30b2 quickly, so that a quick change-gear action is achieved.

As described above, according to the dog clutch control unit for an automatic transmission of the embodiment disclosed here, the distal end portions of the clutch front teeth 30b1 each include a front end surface 30b5 and inclined first chamfered surfaces 30b3 on both sides thereof, and the first stroke position S1 corresponds to boundary sides between the first chamfered surfaces 30b3 and the side surfaces 30b9 of the clutch front teeth 30b1. Therefore, since the first stroke position S1 is set to the boundary sides between the first chamfered surfaces 30b3 and the side surfaces 30b9 of the clutch front teeth 30b1, the fact that the high teeth 36a1 reach the first stroke position S1 can be detected easily by the stroke position sensor 38.

As described above, according to the dog clutch control unit for an automatic transmission of the embodiment disclosed here, the distal end portions of the clutch rear teeth 30b2 each include a front end surface 30b6, and the second stroke position S4 corresponds to the front end surfaces 30b6. Therefore, the fact that the high teeth 36a1 reach the second stroke position S4 can be detected easily by the stroke position sensor.

As described above, according to the dog clutch control unit for an automatic transmission of the embodiment disclosed here, the distal end portions of the clutch rear teeth 30b2 each include the front end surface 30b6 and inclined second chamfered surfaces 30b4 on both sides thereof, and the third stroke position S2 corresponds to the boundary sides between the second chamfered surfaces 30b4 and the side surfaces 30b7 of the clutch rear teeth 30b2. Therefore, the fact that the high teeth 36a1 reach the third stroke position S2 can be detected easily by the stroke position sensor 38.

As described above, according to the dog clutch control unit for an automatic transmission of the embodiment disclosed here, the third thrust load F4 includes a thrust load which may overcome a frictional resistance of the second chamfered surfaces 30b4. Therefore, since the front end surfaces 36a4 of the distal end portions of the high teeth 36a1 of the sleeve 36 can be displaced quickly through the second chamfered surfaces 30b4 toward the tooth grooves 30b8 and 30b10 defined by the clutch rear teeth 30b2 of the dog clutch portion 30a by an action of the third thrust load F4 which may overcome the frictional resistance of the second chamfered surfaces 30b4, a quick change-gear action is enabled when moving the sleeve 36 and engaging the sleeve 36 with the dog clutch portion 30a.

As described above, according to the dog clutch control unit for an automatic transmission of the embodiment disclosed here, the fifth thrust load F5 includes a thrust load which cannot overcome the frictional resistance on the second chamfered surfaces 30b4. Therefore, even when one of the sleeve 36 and the distal end portions 30b4 of the clutch rear teeth 30b2 is deteriorated to have a rough surface and is caught and is rotated associatively by an action of the fifth thrust load F5 which cannot overcome the frictional resistance of the second chamfered surfaces 30b4, the caught state may be released by weakening of the thrust load and, in addition, the relative rotation between the sleeve 36 and the dog clutch portion 30a are secured. Consequently, the sleeve 36 is allowed to engage the tooth grooves 30b8 and 30b10 defined by the next clutch rear teeth quickly, so that a quick change-gear action is achieved.

As described above, according to the dog clutch control unit for an automatic transmission of the embodiment disclosed here, the third thrust load F4 shifts the stroke of the sleeve 36 in micromotion. Therefore, since a state in which the distal end portions 36a4 of the high teeth 36a1 are located between the clutch front teeth 30b1 may be maintained, an event that the sleeve 36 and the dog clutch portion 30a are completely disengaged is prevented, that is, the high teeth 36a1 of the sleeve 36 may prevent occurrence of necessity of repeated operation such as re-entry of the high teeth 36a1 of the sleeve 36 to a range of alignment of rotation. Accordingly, quick engagement between the sleeve 36 and the dog clutch portion 30a is achieved.

As described above, according to the dog clutch control unit for an automatic transmission of the embodiment disclosed here, the fifth thrust load F5 shifts the stroke of the sleeve 36 in micromotion. Therefore, since a state in which the distal end portions 36a4 of the high teeth 36a1 are located between the clutch front teeth 30b1 may be maintained, an event that the sleeve 36 and the dog clutch portion 30a are completely disengaged is prevented, that is, the high teeth 36a1 of the sleeve 36 may prevent occurrence of necessity of repeated operation such as re-entry of the high teeth 36a1 of the sleeve 36 to a range of alignment of rotation. Accordingly, quick engagement between the sleeve 36 and the dog clutch portion 30a is achieved.

This disclosure is not limited only to the embodiment described above and illustrated in the drawings, and may be implemented by modifying the configuration as needed without departing the scope of this disclosure.

When there are a plurality of embodiments, it is apparent that characteristic points of the respective embodiments may be combined as needed unless otherwise specifically mentioned.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A dog clutch control unit for an automatic transmission (13) comprising:
a dog clutch transmission mechanism including:
a rotating shaft rotatably coupled to one of an input shaft (24) and an output shaft (42) of the automatic transmission and axially supported so as to be rotatable about an axis; a clutch ring (30, 32, 44, 46) supported so as to be rotatable about the rotating shaft and rotatably coupled to the other one of the input shaft and the output shaft; a clutch hub (34) fixed to the rotating shaft adjacently to the clutch ring; a sleeve (36) fitted to the clutch hub by means of a spline so as to be movable in a direction of the axis; an axially moving unit (40) configured to move the sleeve in the direction of the axis; a dog clutch portion (30a) formed so as to protrude from the clutch ring toward the sleeve and configured to disengageably engage the spline according to the axial movement of the sleeve; and a stroke position sensor (38) configured to detect the position of movement of the sleeve in the direction of the axis,
the spline having a plurality of high teeth higher than remaining low teeth, the dog clutch portion having an outer diameter larger than an inner diameter of the high teeth and smaller than an inner diameter of the low teeth, and
the dog clutch portion including the same number of clutch front teeth as the high teeth so as to extend from a front end surface to a rear end position of the dog clutch portion at positions corresponding to the high teeth, and the dog clutch portion including clutch rear teeth engageable with tooth grooves of the spline from a position retracted from the front end surface of the dog clutch portion by a predetermined amount to the rear end position of the dog clutch portion; and
a control unit (10) configured to control an action of the axially moving unit on the basis of a detected position detected by the stroke position sensor,
wherein the control unit biases and moves the sleeve toward the dog clutch portion with a first thrust load and, when distal end portions of the high teeth of the spline are displaced toward the clutch rear teeth and reach a first stroke position located at distal end portions of the clutch front teeth, changes the thrust load to a second thrust load which allows the distal end portions of the high teeth of the sleeve to be displaced to the distal end portions of the clutch rear teeth and allows to secure a relative rotation between the sleeve and the dog clutch portion against a frictional force generated by abutment between the distal end portions of the high teeth of the sleeve and the distal end portions of the clutch rear teeth of the dog clutch portion and, when the distal end portions of the high teeth of the sleeve reach a second stroke position at the distal end portions of the clutch rear tooth, changes the thrust load to a third thrust load in which a thrust load which allows the distal end portions of the high teeth of the sleeve to be displaced toward tooth grooves defined by the clutch rear teeth of the dog clutch portion against the frictional force generated by abutment between the distal end portions of the high teeth of the sleeve and the distal end portions of the clutch rear teeth of the dog clutch portion and a thrust load which allows to secure the relative rotation between the sleeve and the dog clutch portion against the frictional force generated by abutment between the distal end portions of the high teeth of the sleeve and the distal end portions of the clutch rear teeth of the dog clutch portion are applied alternately, and when the distal end portions of the high teeth of the sleeve reach a third stroke position of the distal end portions of the clutch rear teeth located rearward of the second stroke position, and increases the thrust bad to a fourth thrust load larger than the third thrust load.

2. The dog clutch control unit for an automatic transmission according to Claim 1, wherein the control unit sets a work-in set time which corresponds to a period of time required for the distal end portions of the high teeth of the sleeve to reach the third stroke position from a predetermined position on the basis of a relative differential rotation between the sleeve and the clutch ring and, if the fact that the distal end portions of the high teeth of the sleeve do not reach from the predetermined position to the third stroke position within the work-in set time is detected, changes the thrust load to a fifth thrust load in which a thrust load which is smaller than the thrust load which allows the distal end portions of the high teeth of the sleeve to be displaced toward the tooth grooves defined by the clutch rear teeth of the dog clutch portion against the frictional force generated by abutment between the distal end portions of the high teeth of the sleeve and the distal end portions of the clutch rear teeth of the dog clutch portion of the third thrust load and a thrust load which is smaller than the thrust load and allows to secure the relative rotation between the sleeve and the dog clutch portion against the frictional force generated by abutment between the distal end portions of the high teeth of the sleeve and the distal end portions of the clutch rear teeth of the dog clutch portion are applied alternately.

3. The dog clutch control unit for an automatic transmission according to Claim 1 or 2, wherein
the distal end portions of the clutch front teeth each include a front end surface and inclined first chamfered surfaces on both sides thereof, and the first stroke position corresponds to boundary sides between the first chamfered surfaces and side surfaces of the clutch front teeth.

4. The dog clutch control unit for an automatic transmission according to any one of Claims 1 to 3, wherein
the distal end portions of the clutch rear teeth each include a front end surface, and the second stroke position corresponds to the front end surfaces.

5. The dog clutch control unit for an automatic transmission according to any one of Claims 1 to 4, wherein
the distal end portions of the clutch rear teeth each include the front end surface and inclined second chamfered surfaces on both sides thereof, and the third stroke position corresponds to boundary sides between the second chamfered surfaces and side surfaces of the clutch rear teeth.

6. The dog clutch control unit for an automatic transmission according to Claim 5, wherein
the third thrust load includes a thrust load which may overcome a frictional resistance of the second chamfered surfaces.

7. The dog clutch control unit for an automatic transmission according to Claim 5 or 6, wherein
the fifth thrust load includes a thrust load which cannot overcome the frictional resistance on the second chamfered surfaces.

8. The dog clutch control unit for an automatic transmission according to any one of Claims 1 to 7, wherein
the third thrust load shifts the stroke of the sleeve in micromotion.

9. The dog clutch control unit for an automatic transmission according to any one of Claims 2 to 9, wherein
the fifth thrust load shifts the stroke of the sleeve in micromotion.
